# EUROPEAN PATENT SPECIFICATION

(11) **EP 4 386 335 B1**
(45) Date of publication and mention of the grant of the patent: **22.04.2026**
(21) Application number: 22214154.1
(22) Date of filing: 16.12.2022
(51) Int. Cl.: G01G 19/56, A47J 31/40

(54) **SCALE SYSTEM**
WÄGESYSTEM
SYSTÈME DE BALANCE

(43) Date of publication of application: 19.06.2024
(73) Proprietor: APTAR EUROPE HOLDING SAS, 92500 Rueil-Malmaison (FR)
(72) Inventor: Barrios, Piers, 61000 Alencon (FR); McGeough, Peter, Kells, County Meath A82 N5H6 (IE)
(74) Representative: Witte, Weller und Partner Patentanwälte mbB Stuttgart

(56) References cited:
- US-A1- 2007 034 084

## Description

### FIELD OF APPLICATION AND PRIOR ART

The invention relates to a scale system for measuring a quantity of powder, in particular for measuring a quantity of powder for mixing baby food.

The preparation of infant formular and baby food, in particular baby milk, from powder requires a dosage of this powder. Usually, this dosing is done by measuring a dosing volume by means of a measuring scoop with a defined measuring scoop volume. For example, it is usual to mix 100 ml of heated water and four volumes of the measuring scoop of milk powder to produce 120 ml of baby milk.

However, this type of dosing is prone to errors. If the measuring scoop is overfilled, too much powder may be mixed with too little water. If the measuring spoon is not completely filled, for example because there is an empty area below a closed powder surface, then too little powder may be mixed with too much water. Furthermore, there is a risk that an error occurs regarding the numbering of filled scoops and too many or too little spoonfuls of powder are added to the water.

It is well known that scoop scales are used to control the amount of powder measured by the measuring scoop. However, scoop scales are difficult to handle and must be correctly aligned manually for correct measurement. In addition, a scoop scale cannot reliably prevent one full scoop too little or one full spoon too much of powder being mixed with the water due to miscount.

Measuring a powder quantity is not only used for baby food. There is also a similar need in other fields as in the area of adult nutrition, especially in the area of sports nutrition.

Document US 2007/0034084 A1 describes an automated preparation device, particularly for baby formula. It features a front-side door for inserting and removing a container into a cavity above a weighing platform. The device automatically dispenses precise amounts of powder and water through nozzles located above the cavity. The weighing platform measures the container's weight during preparation to ensure accurate dosing.

### OBJECT OF THE INVENTION

The object of the invention is to provide an advantageous possibility to be able to measure a product quantity in a simple and exact way, in particular a powder quantity of baby milk powder.

According to the invention, a scale system is primarily proposed for this purpose, which is designed in a special way to comprise or accommodate a powder container filled with powder.

A scale system according to the invention has a base housing for stationary placement. In particular, this base housing can be formed with feet made of rubber or plastic, so that it can be placed on a table or a kitchen surface without damaging the surface.

The scale system further comprises a weighing surface which is movable in a vertical direction relative to the base housing so as to be depressed by the weight force of a weighing product resting on the weighing surface.

To detect the mass of the weighing surface and the powder being placed thereon, the scale system has a weighing sensor that in particular measures the mass of a powder container filled with powder that can be placed on the weighing product surface. The weighing sensor can, for example, be a force sensor or a pressure sensor.

The scale system also has an evaluation device, which is designed to evaluate sensor data from the weighing sensor and to generate output data, which is then being output on a display device.

In the state of use, the powder is resting on the weighing surface, preferably in a disposable powder container, which in particular preferably simultaneously represents the delivery packaging of the powder. For example, it can be a metallic can or a disposable plastic container. Further details on possible containers are explained in further detail below. In addition to the scale system for receiving such a container, the invention also relates to a set which, in addition to the scale system, comprises at least one such powder container.

The powder container remains on the weighing surface for a longer period of time during the use of the scale system and during the removal of powder, so that with increasing removal of powder from the container, the reduction in the weight of the container and the remaining powder is detected by the weighing sensor. Based on the detected weight, the scale system generates output data that is output to the display device.

The scale system according to the invention is intended in particular for measuring a quantity of powder, whereby granules are also understood within the meaning of powder according to this invention. In principle, use for other non-powdery products is also possible, for example for liquid or highly viscous cream-like products. Additional to the main aspect of the invention concerning the use with powder, the invention also comprises, according to a secondary aspect, a scale system for measuring said other products and in particular liquids. Insofar powder is referred to in the context of the description, this equally includes the other products mentioned above and in particular liquid products in case the scale system is intended or designed for said other products.

Preferably, it is provided that the evaluation device is configured to determine during a stepwise removal of a partial mass from the weighing surface the partial mass already removed in course of the specific removal operation by comparing the mass currently measured by the weighing sensor with a previously recorded reference mass prior to the beginning of the removal operation. On basis of said partial mass already removed the evaluation device generates output data displays said output data on the display device. Said output data reflects the partial mass removed since the recordation of the reference mass and comprises an increasing output value representing the removed partial mass. With the progressive removal of further powder from the powder container, this output value increases stepwise.

The scale system according to the invention is thereby able to inform the user which powder quantity he has already removed, for example for the production of one current bottle of baby milk. As the removal progresses, the value increases. As soon as the user has removed the intended amount of powder, he ends the removal. Advantageously the user gets a specific signal once a sufficient mass of powder has been removed.

The risk of using too little or too much powder is thereby reduced. The danger of the user miscounting the number of scoops already removed is also reduced. The user can check the current status of the removal on the display device. Even if the measuring scoop is not filled correctly, or if the powder is not taken with a measuring scoop of defined volume, but for example by means of an ordinary tablespoon, the user can record on the display device the amount of powder already removed and check whether further powder is required.

Said value, which is generated by the evaluation device, and which is output as part of the output data from the display device, can in the simplest case be the powder mass removed since the reference mass was recorded in grams. For example, if a mass of 3,6 grams of powder is taken as a single volume of measuring scoop and if three spoonfuls of powder are being removed, the output value increases from 0 to 3,6, then from 3,6 to 7,2, and finally from 7,2 to 10,8.

However, it is preferable that the value corresponds to a number of mass units stored in the evaluation device or calculable by the evaluation device, or that such a value on basis of said mass unit is output in addition to the simple mass value described above. A mass unit can correspond in particular to that mass which of the scoop filling quantity of a defined level scoop, such a measuring scoop preferably being part of the scale system. The size of the unit mass preferably is between 2 grams and 10 grams. Referring to a milk powder with 500 grams / liter, for example, a mass unit of 3,6 grams corresponds to a spoon filling quantity of 7,2 cm³.

The size of a mass unit can be permanently stored in the evaluation device. It is also possible that several different mass units are stored there, corresponding to different measuring scoops. Alternatively, the size of the mass unit can also be calculated by the evaluation device, for example, by calculating the mass per spoonful volume on the basis of a known spoonful volume stored in the evaluation device and additionally using a density value specific to the current powder. Usually, infant formular powder has a density between 0,4 g/cm³ and 0,5 g/cm³.

Using a mass unit, which corresponds to the level scoop filling volume of a measuring scoop, the output value generated by the evaluation device and displayed on the display device increases from 0 to 1, then from 1 to 2, and finally from 2 to 3, when three spoonfuls of powder are removed.

Although this number of full spoonsful is usually an integer number when removing intended scoop fill quantities, the value can also be displayed in the form of a decimal fraction, depending on the configuration of the evaluation device. For example, a value of 0.8 can be displayed if the powder quantity of an incompletely filled measuring scoop is removed from the container.

The measuring scoop associated with the scale system preferably has a scoop volume of between 1 cm³ and 30 cm³, in particular between 4 cm³ and 9 cm³. It can be advantageous to use a relatively heavy spoon, for example a metallic spoon with a mass of 20 grams or more, in order to detect its separation from a scoop holder described below.

The scale system preferably has a leveling rim, which is preferably not provided on the disposable container itself, but on the scale system separate from the container. By means of this leveling rim, excess powder can be wiped from the measuring scoop, so that the measuring scoop has a level powder surface as intended.

For the measuring scoop associated with the scale system, a scoop holder is preferably provided on the scale system, by which or in which the measuring scoop is stored when not in use. The scoop holder can be provided on the base housing or stationary relative to the weighing surface, whereby this also includes a holder on a lid which is stationary relative to the weighing surface when the lid is closed. In particular, the scoop holder can be provided on an inner side of the lid. Suitable holders for the scoop can be provided for magnetic adhesion of the measuring scoop or also for clamping reception of the measuring scoop. In the case of a clamping holder, the holder is preferably at least partially made of an elastomer material which is elastically deformed to accommodate the measuring scoop.

Preferably, the evaluation device is not only configured to generate the output value for display on the display device, but also to determine the partial mass of a single removal in the course of the stepwise increase of the removed partial mass, and to compare the partial mass of the single removal with an expected mass of a scoop volume full of powder. The evaluation device is therefore able to compare the powder mass taken in the course of a single removal with a mass value, which corresponds to a correctly filled measuring scoop and which can be stored in the evaluation device or be calculated by the evaluation device, taking into account the powder density. A deviation of the powder mass of the single removal from the expected powder mass represents an indication of incorrect use of the measuring scoop.

The detection of a deviation can be signaled to the user by the evaluation device, for example by an acoustic signal generator. In particular, the signaling may be provided by the display device. For example, the display device can indicate to the user whether the measuring scoop is overfilled or un-derfilled or if more scoops are taken than intended. The display device can show this in text form or by means of a symbol graphic. Furthermore, it can be provided that the display device contains a further action instruction for the user, for example an instruction to pour the contents of the incorrectly filled scoop back into the powder container and to try again.

As described above, the determination of the powder mass removed is carried out by a comparison of the mass detected by means of the weighing sensor and the reference mass stored before the start of the removal operation. The reference mass can be determined immediately at the start of the use of the scale system by reading out the weighing sensor. Preferably, however, the reference mass is already determined at the end of the previous usage and stored in a memory of the evaluation device.

The evaluation device is designed to detect the start of use of the scale system, for example, in order to determine the reference mass in response thereto and/or in order to activate a removal mode in response thereto, wherein in said removal mode the described evaluation of the removed mass and the display on the display device takes place. In particular, the weighing sensor can be activated in response to the beginning of the usage.

The evaluation device can detect the beginning of the usage of the scale system, for example, on the basis of the opening of a lid of the scale system. This can be done by a sensor provided on the lid or a locking device, or it can be done by the weighing sensor of the scale system. An additional acceleration sensor can also be used for detecting the opening of the lid. Furthermore, a movement of the scale system as a whole, for example due to its positioning on a table surface, can also be detected by the weighing sensor or an additional sensor and used to detect the beginning of usage. Furthermore, the separation of the measuring scoop from the lid can also be detected in order to recognize the beginning usage. The separation of the measuring scoop from the lid can be detected, for example, by a correspondingly reduced mass detected by the weighing sensor. Furthermore, a first partial removal of powder can also be detected and interpreted as the start of usage.

Apart from a recognition of the beginning of the usage by the described sensors, also a manually start function can be provided, by which the user changes the evaluation device to a removal mode and/or makes the evaluation device measure the reference mass. The start function can be initiated, for example, by a hardware button on the scale system or by a software button on a touchscreen or in an app on a connected smartphone.

For the described functionality of the evaluation device, it is sufficient to store data on the partial removals during a removal operation, for example during the removal of three scoops to be filled into a baby bottle. Preferably, however, the evaluation device stores the data for a plurality of removal operations over a longer period of time, in particular the data for all removal operations from a powder container starting from its initial opening until it is empty and replaced.

This data on the past removal operations can be output via the display device. Also, evaluations concerning missed removal operations and/or statistics to powder quantities deviating from the intended powder quantity can be provided. If a smartphone is being used to facilitate the removal operation, it is also possible to store data on who conducted the removal operation and thus prepared the baby food.

The invention relates to the design of the scale system with a receiving space for receiving an exchangeable powder container, wherein a bottom surface of the receiving space is formed by the weighing surface.

In such a design, the scale system does not have a weighing surface which is freely accessible from all sides, but it is fully or essentially closed forming said receiving space, such that the powder container can be fully inserted into the receiving space. The weighing surface forms the bottom surface of the receiving space. The powder container is preferably inserted from above. Once inserted, the powder container is protected by the receiving space when not in use. In order to access the powder, the receiving space can be opened, preferably using a lid.

According to the invention, the receiving space is surrounded circumferentially by a receiving space wall. This wall can be provided stationary on the base housing. Preferably, however, it is fixed to the weighing surface and thus movable relative to the base housing together with the weighing surface. In this case, the mass of the peripheral receiving space wall also bears on the weighing sensor. In particular, preferably at least part of the receiving space wall is integrally connected to the weighing product surface. The weighing surface and a part of the receiving space wall are then formed by an upwardly open and preferably cup-like receptacle, into which the powder container can be inserted from above. The receiving space preferably has a cylindrical shape. Its base can be round, but it can also have a different shape and be for example rectangular.

On the upper side opposite the weighing surface, a removable or displaceable lid is provided, by means of which the receiving space can be opened in order to remove powder from the powder container and closed when not in use. This allows the powder to be protected when not in use. Preferably an own cover of the powder container is not placed back on the container after insertion of the powder container in the receivingspace, but instead the lid delimiting to the top side of the receiving space protects the powder in the powder container.

The lid can be movably provided at an upper end of the receiving space wall. In particular, it can be movable pivotably having a hinged lid with the hinge being provided at the upper end of the receiving space. In this case, it is preferably provided that a snap-locking device is provided opposite the lid hinge for securing the lid in the closed state, said snap-locking device preferably provided in the form of a pivotable snap-locking tab on the receiving space wall or on the lid. A snap-locking device allows the lid to be closed particularly tightly. Preferably, a sealing component is provided on the lid or opposite it on a contact edge to provide a secure sealing in the closed state.

In one particular design of the receiving space wall, the receiving space wall is modular so that the receiving space can be variably configured with respect to its size. This can be achieved by joining two receiving space wall elements, one of which being available in different sizes as part of the scale system. A preferred design is one in which at least three receiving space wall elements are provided, wherein the size of the receiving space can be varied by using or not using at least one of the three receiving space wall elements. In particular, in a design having three receiving space wall elements, it may be provided that a first receiving space wall element is connectable to a second receiving space wall element and the second receiving space wall element is connectable to a third receiving space wall element by respective identical coupling means, for example by threaded means. Therefore, the second receiving space wall element can be fully removable to reduce the size of the receiving space and the first receiving space wall element can then be directly connected to the third receiving space wall element.

Preferably, it is provided that the receiving space wall is formed by at least two separable wall parts, which can be separated from each other for the purpose of removing a powder container and for the purpose of inserting a powder container. The wall parts can be identical with the above-described receiving space wall elements. However, a wall part can also be formed jointly by several and in particular of two receiving space wall elements.

In such a design with at least two separable wall parts, it is preferably provided that an upper one of the two wall parts has an inner diameter which is smaller than that of the powder container. When the two wall sections are connected after insertion of the container, the container is thus secured in the receiving space and cannot be removed out of the receiving space through upper wall part.

In the case of such two wall parts, which are separated for the purpose of inserting the container, it is advantageous if the wall parts can be connected to each other by a threaded connection. Preferably, the wall components are formed at least in sections as circular-cylindrically shaped wall parts for this purpose.

Alternatively, the wall parts can also be connected by a snap connection. In particular, a snap connection is preferred in the case of a non-circular cylindrical receiving space, for example in the case of a receiving space with a square or rectangular cross-section, in which a threaded connection is difficult to implement.

Preferably, the receiving space wall is provided with a wall window. Through the wall window, imprints on the inserted powder container can be read.

In use, the scale system is equipped with a container in which the powder, in particular infant formula, is contained and which preferably is the delivery packaging of the powder. This container is arranged on the weighing surface during operation.

Various types of containers can be used in a scale system according to the invention. Potential containers may have walls which are at least partially made of metal. In particular, a container body is preferably made of metal and in particular as a metal can, while a removable lid can also made of metal or of plastic. In another design the powder container is made partially or as a whole of plastic. In particular, it may be a multilayer plastic body forming the container body.

A particularly preferred form of a powder container used with the scale system according to the invention is made partly or entirely of cardboard and/or other paper or another cellulose-based material. Such a powder container represents a particularly environmentally friendly design and is easy to recycle. The powder container is protected against external influences by the receiving space of the scale system, so that thin and flexible paper walls can be sufficient in regular use.

Basically, two types of containers are possible, namely on the one hand powder containers with flexible walls in the manner of a powder bag, and on the other hand powder containers with rigid walls, which form a container body with essentially fixed dimensions. A powder bag needs a smaller amount of material and is therefore usually a more environmentally friendly solution, in particular in case of a bag of paper.

The powder container preferably has a closure element, which closes the container in the delivery state of the powder container and which is removed prior to the insertion into the receiving space. The closing element is no longer required after insertion of the container into the receiving space, since the powder contained in the container is protected from outside influences by the receiving space walls and the lid from the time of insertion into the receiving space.

Ascale system according to the invention can be formed by a single structural unit thus forming the main unit, the basic housing of which preferably comprising the evaluation device and the display device. A preferred design is one in which the scale system comprises two subunits, namely a main unit comprising at least the base housing and the weighing surface and the weighing sensor, and an additional unit comprising at least the display device. Preferably, the additional unit is a computer, a tablet computer, a smart watch or, in particular, a smartphone equipped with an app connected to the main unit via a wireless network interface. The display device of the additional unit may be provided instead of a display device on the base housing. However, designs are possible in which a display device is also provided on the base housing. Preferably, at least one output device in the form of an LED or a loudspeaker is provided on the base housing.

The scale system, in particular its additional unit which preferably is a smart phone, can be connected to the Internet, in order to exchange data with a server on the internet. The scale system is preferably designed to initiate ordering processes concerning new powder containers. Preferably, the ordering process or a signaling to the user preceding the ordering process takes place as a function of a mass of the remaining powder detected by the weighing sensor. In case of an existing Internet connection, the scale system can also be designed to download data on different types of powder containers from the Internet, for example, in order to receive the powder density and/or dosage specifications for them and, if necessary, to use this information in the course of the evaluation by the evaluation device. The Internet connection also allows product authentication to be carried out in order to check originality criteria of an existing powder container.

The evaluation device, which evaluates the sensor data from the weighing sensor and generates the output data on the basis of this, can, in one possible design, be arranged completely in the main unit, in particular in the base housing. Accordingly, the main unit is fully functional on its own.

Alternatively, the evaluation device can also be subdivided into two evaluation subunits, one evaluation subunit in the main unit and one evaluation subunit in the additional unit. In such a design, it is thus provided that the generation of the output data for the display device takes place with the participation of both the main unit and the additional unit, and thus in particular of a smartphone. The evaluation subunits preferably each have a processor and memory. They preferably communicate via a wireless network such as WIFI or Bluetooth. They evaluation subunits can also be separately connected to the Internet and communicate with each other via the Internet.

In one possible embodiment, the acquisition of sensor data from the weighing sensor and possibly other sensors of the main unit is performed by the main unit and its evaluation subunit. The sensor data or a mass value determined on the basis thereof is then transmitted to the additional unit and its evaluation subunit, where further evaluation takes place, in particular the conversion into a value representing the removed mass or the removed scoop volumes and/or the check whether the mass of a partial removal corresponds to the mass to be expected on the basis of the measuring scoop. Alternatively, however, it can also be provided that the generation of the output value already takes place on the evaluation subunit of the main unit and is transmitted to the additional unit for the purpose of the displaying only.

The scale system can be designed in such a way that, at least on the main unit, it has no further sensor besides the weighing sensor. In addition to the actual detection of the mass of the remaining powder containers, the weighing sensor can also take over other functions, such as the detection that a removal operation has been started. With suitable evaluation, the weighing sensor can also be used, for example, to detect the opening of the lid or the changing of the container. A main unit with only one weighing sensor allows a relatively low production price.

However, the scale system, in particular its main unit, can also be equipped with at least one further sensor. This may, for example, be a sensor designed to detect a marking applied to the container, in particular an RFID reader or an optical sensor. This can be used to record data about the powder in question or to check the originality of the powder. However, instead of a sensor on the main unit, existing sensors of the smartphone used as an additional unit can also be used for this purpose.

Furthermore, a further sensor can also be provided on the main unit for mechanical detection of the opening of the lid, for example a switch or an acceleration sensor. An acceleration sensor can also detect the handling of the main unit regardless of a lid movement.

Preferably, the evaluation device, or the evaluation subunit on the main unit, can be operated in a power saving mode in which at least the weighing sensor is deactivated or not monitored, but parts of the evaluation subunit are in operation, the evaluation subunit being adapted to terminate the power saving mode in response to the detection of a manual activation or in response to specific sensor data from other sensors and thus to activate the weighing sensor. In particular, this can be done in response to the detection of a movement, determined by an accelerometer sensor.

The scale system, or in particular an app that is part of the scale system and which is executed on a smartphone, can also have supplementary functions in connection with the removal of powder, in addition to the main scale function. In particular, the scale system can have a signaling mechanism that indicates by signaling an upcoming planned removal of powder. This signaling can take place optically, acoustically and/or haptically via a vibrator. The scale system has furthermore preferably a logging mechanism, which logs the removal of powder and/or the expected, but missing removal of powder due to a time schedule deposited in a memory, in order to output this data or data derived therefrom on the display device. This can also include recommendations regarding the handling of the scale system.

For the purpose of easy cleaning, it is advantageous if the scale system or its main unit can be disassembled without tools. In particular, preferably the base housing and/or the weighing surface is separable from each other and/or from the weighing sensor. Preferably, the main unit has an electronic module enclosed by a housing, said module comprising all or at least the majority of the electronic components of the main unit and being separable as a whole from the base housing.

The scale system, in particular its main unit, can have a battery in order not to have to be permanently connected to an external power source. For powering the scale system and/or for charging said battery, a power connector is preferably provided on the main unit, in particular in the form of a USB power connector.

### BRIEF DESCRIPTION OF THE DRAWINGS

Further advantages and aspects of the invention are described and shown in the claims and in the following description of preferred embodiments of the invention, which are explained below with reference to the figures.
Fig. 1 shows a first embodiment of a scale system according to the invention with its partial components.
Fig. 2 shows a sectional view of the main unit of the scale system.
Fig. 3 shows the structure of the main unit with an exploded view of its components.
Fig. 4A to 4C illustrate the insertion of a powder container into the main unit.
Fig. 5 and 5A to 5F illustrate an exemplary removal operation, in the course of which three spoonfuls of powder are removed from a powder container while this process is monitored.
Fig. 6 shows an alternative design of a main unit.
Fig. 7A and 7B show the alternative main unit of Fig. 6 during the insertion of a powder container.

### DETAILED DESCRIPTION OF THE EMBODIMENTS

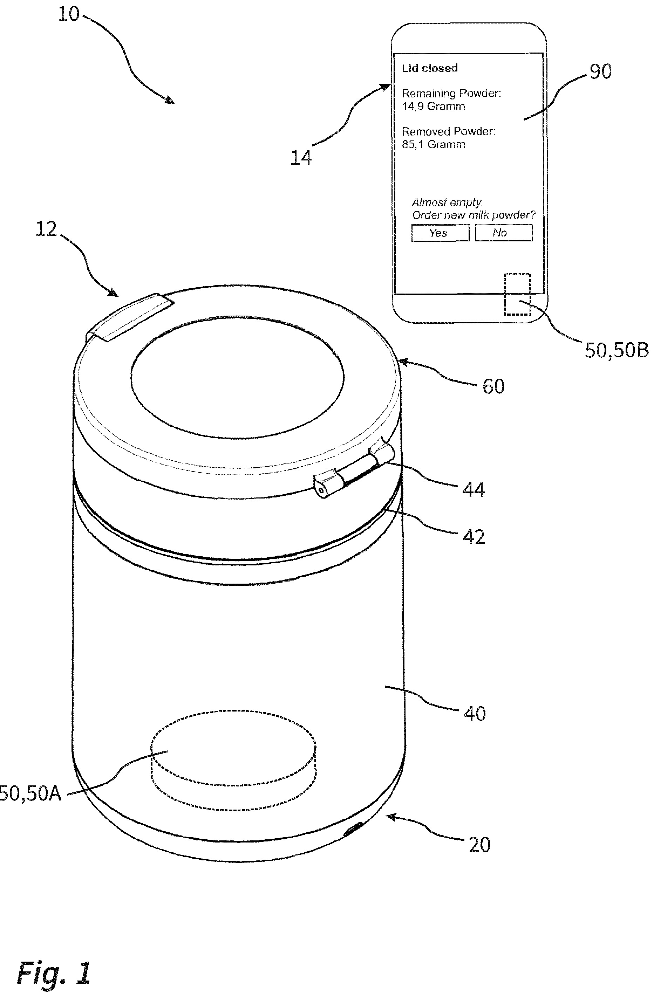

Fig. 1 shows a scale system 10 according to the invention comprising a main unit 12 and an additional unit 14 in the form of a smartphone.

The scale system 10 is intended for handling infant formular in powder form and for allowing easy powder dosing, in particular in course of the preparation of baby milk.

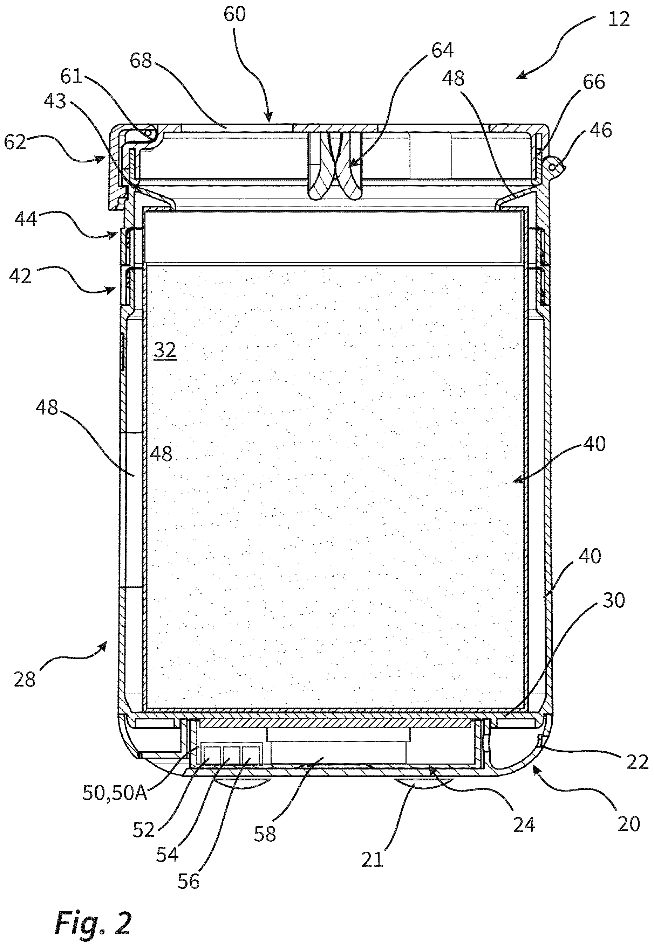

For this purpose, the main unit 12 is designed to receive a powder container 80. The main unit, which is shown in a sectional view in Fig. 2, has a flat base housing 20 with rubber feet 21. An electronics module 24 is located in a central recess of the base housing, which can be connected to a power source through an opening 22 in the base housing.

The electronics module 24 carries on its upper surface a cup-shaped receptacle 28, which is formed primarily by a weighing surface 30 and integrally therewith by a substantially cylindrical receiving space wall part 40. This receiving space wall part 40 is adjoined by a second receiving space wall part 42 and a final receiving space wall part 44. A hinged cover 60 is attached to the receiving space wall part 44, which can be pivoted by means of a hinge 46 and which has an outer part 61 and a sealing component 66 inserted therein. Opposite the hinge 46, the lid 60 is provided with a snap-lock device 62 getting in locking engagement with the receiving space wall part 44 when the lid 60 is closed.

On the inside of the lid 60, a scoop holder 64 is provided for receiving a measuring scoop. Furthermore, the lid 60 is provided with recesses forming lid windows 68. Additionally, the receiving space wall part 40 is provided with a viewing window 48.

Together, the weighing surface 30, the receiving space wall parts 40, 42, 44 and the lid 60 surround a receiving space 32. When the lid 60 is closed, the receiving space is essentially closed and thus protected against the ingress of moisture.

A powder container 80 is inserted into the receiving space 32. This powder container 80 is preferably a powder container 80 to be used only once and to be replaced once empty. The powder container 80 is formed by the packaging the powder has been sold / delivered in. As soon as the powder container 80 is empty, it is disposed and replaced by a new powder container 80. It is also possible to directly use the cup-like receptacle 28 as a powder container and to empty the powder into this reusable cup-like receptacle 28 in order to use it as powder container.

The lid 60 is opened when the removal of powder from the powder container 80 is intended. It can be swung open after opening the snap-lock device 62. Powder can then be removed from the powder container 80 with the measuring scoop, whereby it can be ensured by means of a leveling rim 45 that the measuring scoop 18 is levelled full at each removal.

In order to hold the powder container 80 securely in the receiving space 32, the upwardly terminating receiving space wall part 44 has an inwardly pointing retaining web 43. The inside diameter of the retaining web 43 is smaller than the powder container 80, so that the powder container 80 is secured in the receiving space 32.

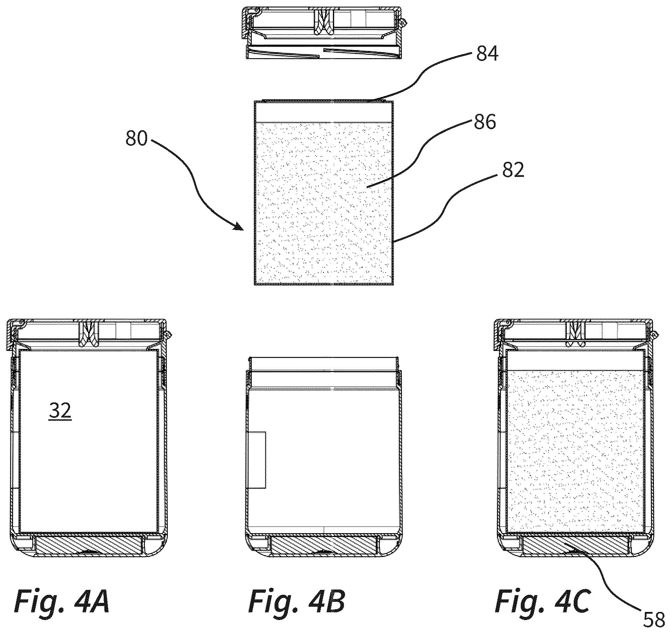

In order to remove the powder container 80 and to insert a new powder container 80, the multi-part design of the receiving space wall parts 40, 42, 44 is used. Figs. 4A to 4C illustrate this. The receiving space wall parts 42, 44, which are connected by a thread, are separated from each other, so that the receiving space 32 is accessible. Then, in the manner shown in Fig. 4B, the new powder container 80 containing powder 86 is inserted. However, a closing element 84 is first separated from a container body 82 of the powder container 80. Subsequently, the receiving space wall part 44 together with the lid 60 is screwed on, whereby a centering of the powder container 80 takes place due to the conical shaping of the retaining web 43. Fig. 4C shows the situation after insertion of the new powder container 80.

If a powder container with a smaller height is inserted, it is possible to remove the receiving space wall part 42 and to directly connect the receiving space wall parts 40 and 44 to each other.

Referring to the condition of Fig. 4C, the weighing sensor 58, which is part of the electronics module 24, detects the mass of the weighing surface 30 resting on it, together with the powder container 80 resting on it, as well as the receiving space wall parts 40, 42, 44 and the lid 60 together with the removal scoop 18 fastened in it.

Sensor data from the weighing sensor 58 is processed by a processor 52, which is supplied with electrical power by a battery 54 and which is in communication with the additional unit 14 shown in Fig. 1 by means of a wireless network interface 56. The processor 52 is adapted to further process the data acquired by the weighing sensor 58 and to transmit it to the additional unit 14. The further processing by the processor 52 of the main unit 12 can be of different types depending on the intended distribution of tasks between the evaluation subunits 50A, 50B.

The evaluation device 50 as a whole is designed to display the weight force detected by means of the weighing sensor 58 in a manner helpful for the removal operation on a display device 90. In particular, the display device 90 is the display of the smartphone 14, for which purpose an app as part of the weighing system 10 is preferably executed on the smartphone.

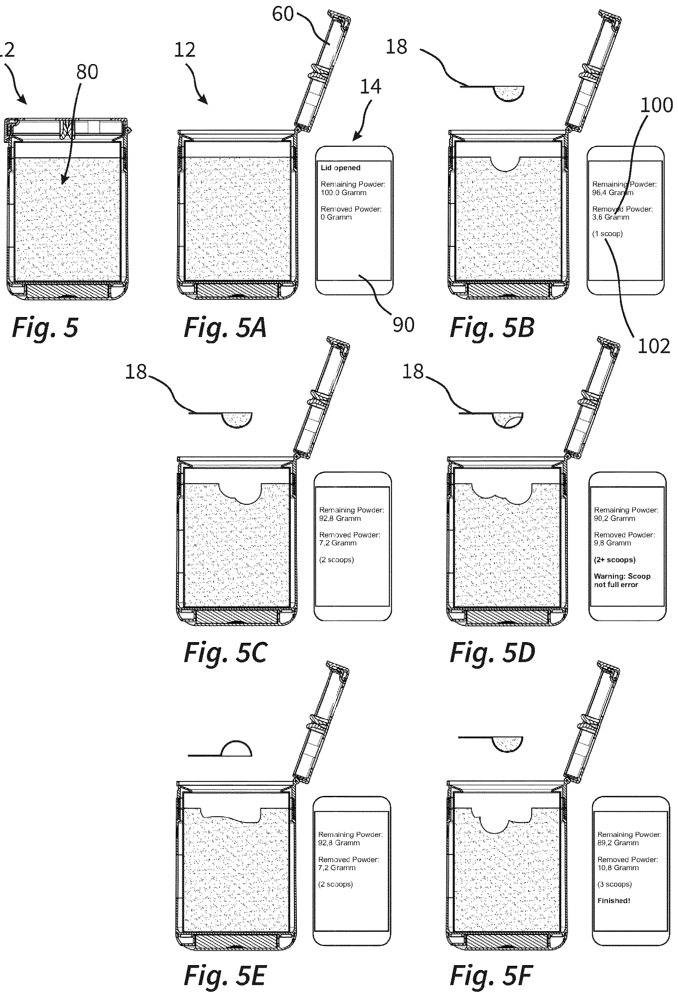

This is explained in detail with reference to Figs. 5 to 5F.

Fig. 5 shows the initial state after insertion of the new powder container 80. In this state, the weighing sensor 58 measures a mass of 265 grams as an example. This is the sum of the mass of the weighing surface 30, the receiving space wall parts 40, 42, 44 and the lid 60 of a total of 100 grams, the mass of the measuring scoop of 15 grams, the mass of the powder container of 50 grams and the mass of the powder itself of a total of 100 grams. In a memory of the evaluation device 50, a current mass value is stored as reference mass, preferably the powder mass value of 100 grams calculated on the basis of 265 grams.

As shown in Fig. 5A the lid 60 is opened to start the removal operation, namely to take three full scoop volumes form the powder container resulting in 10.8 grams of milk powder to prepare 90 ml of baby milk.

The main unit 12 is opened by pressing the snap-lock device 62. This results in a characteristic change in the force detected by the weight sensor 58. The processor 52 processes this change. In response thereto, or in response to a subsequent separation of the measuring scoop 18 and a measurement thereof by the weighing sensor 58, the evaluation device 50 assumes that a removal operation has started. Accordingly, information regarding the current removal operation appears on the display device 90.

The information shown on the display device 90 includes an indication of the amount of powder of 100 grams that is currently still available. This value initially corresponds to the stored reference mass value. Initially, 0 grams is still displayed on the display device 90 as the powder quantity removed.

As shown in Fig. 5B, the measuring scoop is now filled for the first time and freed of excess powder by means of the levelling rim 45. As soon as a constant measured value is again obtained at the weighing sensor 58, the evaluation device 50 recognizes that the remaining mass has been reduced by 3.6 grams, whereby this corresponds to the removed mass of the measuring scoop volume with the measuring scoop correctly filled. The remaining mass of 96.4 grams is displayed on the display device, as well as the information that 3.6 grams have been removed and that this corresponds to one scoop.

Fig. 5C shows the situation after the remaining mass has also been reduced by further 3.6 grams during the second removal. This corresponds to the mass to be expected with two correctly measured scoop volumes. Accordingly, the display device also shows the indication that this corresponds to two scoops in addition to the summed removal of 7.2 grams.

Fig. 5D shows a third removal, which is, however, incorrect. As can be seen in the figure, the measuring scoop 18 is not completely filled, as it has a powder-free area below the surface that is difficult for the user to see.

The evaluation device 50 recognizes that not the expected further 3.6 grams have been removed, but instead only 2.6 grams. This information is shown on the display device. A visually highlighted message is displayed that the powder mass of the last removal does not correspond to that expected. Alternatively or additionally, this can be signaled acoustically and/or by means of a signal LED. In particular, preferably, a loudspeaker is provided as part of the electronic module 24, which indicates the non-expected removal by a warning tone.

The user hereby recognizes the error and pours the scoop contents back into the container 80, as is illustrated in Fig. 5D. The data as after the second removal of Fig. 5C appears again on the display device 90.

The user then removes another spoonful of powder from the powder container 80 and makes sure that the scoop is completely filled this time. The evaluation device 50 recognizes from the mass detected by the weighing sensor 58 that the expected mass of 3.6 grams has now been removed, and displays the resulting value on the display device 90. Furthermore, it can also indicate here that the desired total quantity has now been removed from the powder container 80 and thus the removal operation shall end. Preferably, this is also acoustically indicated by the aforementioned loudspeaker of the electronic module 24.

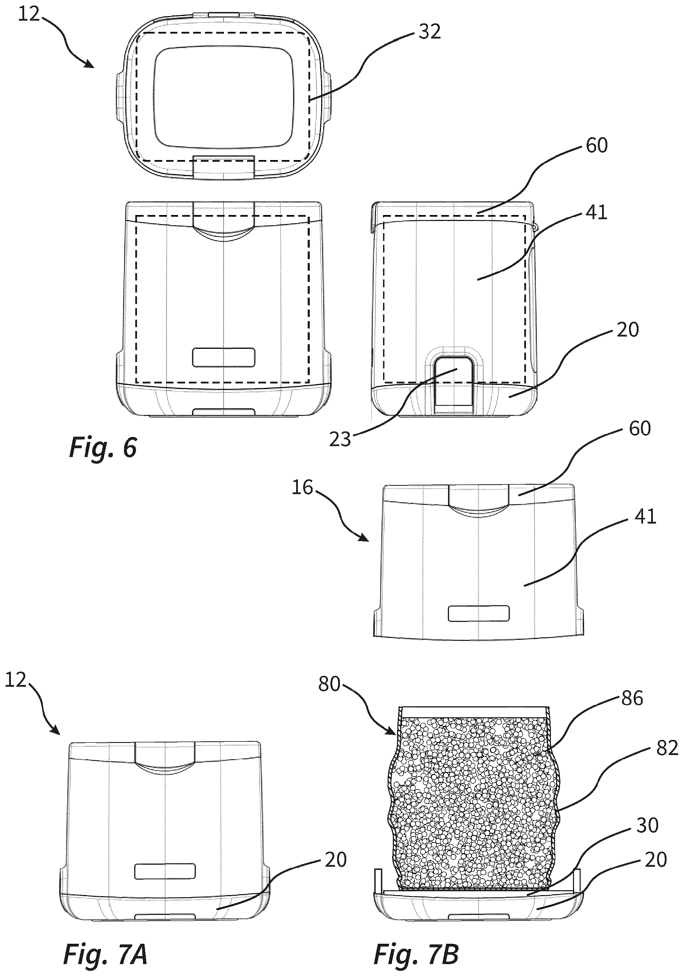

Figs. 6 and 7A and 7B show an alternative version of the main unit 12. One essential difference to the main unit 12 of the preceding figures is that the main unit 12 of Figs. 6 and 7A and 7B defines a cuboid-shaped receiving space 32. Another essential difference is that, for inserting a powder container 80, an upper part 16 of the main unit 12 can be removed, which comprises the entire surrounding receiving space wall 41 as well as the lid 60.

Once this upper part 16 has been lifted, the powder container 80 can be positioned on the weighing surface 30. In particular, it can be a powder container 80 with paper walls, which has an advantageous inherent stability due to its cuboid shape. After the powder container 80 is correctly arranged, the receiving space 32 is closed again by putting on the upper part 16.

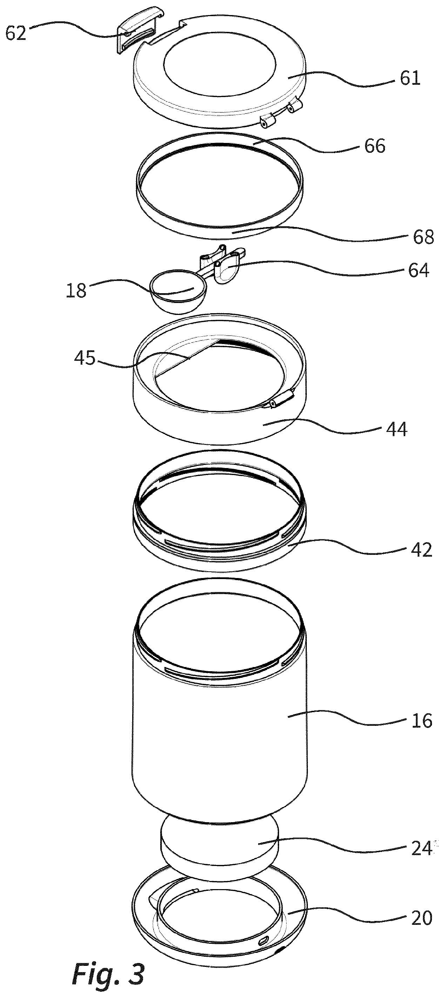

The upper part 16 is then fastened to the base housing 20 by means of snap locks 23. This results in a further difference to the design of Figs. 1 to 4. Unlike there, in the main unit 12 of Figs. 6 and 7A and 7B, the upper part 16 together with the lid 60 does not rest on the weighing sensor 58.

## Claims

1. Scale system (10) for measuring a powder quantity with the following features:
a. the scale system (10) comprises a base housing (20) for stationary placement, and
b. the scale system (10) comprises a weighing surface (30) movable relative to the base housing (20), and
c. the scale system (10) comprises a weighing sensor (58) that measures the mass of a powder container (80) on the weighing surface (30), and
d. the scale system (10) comprises an evaluation device (50), which is designed to evaluate sensor data from the weighing sensor (58) and to generate output data, and
e. the scale system (10) comprises a display device which is designed to output the output data, and
f. the scale system (10) comprises a receiving space (32) for receiving a powder container (80), the bottom surface of said receiving space (32) being formed by the weighing surface (30),
**characterized by** the following further features:
g. the receiving space (32) is circumferentially surrounded by a receiving space wall (40, 42, 44), and
h. on an upper side opposite the weighing surface (30) the receiving space (32) is provided with a removable or displaceable lid (60) which, in a closed state, closes off the receiving space at the top.

2. Scale system according to claim 1 with the following further features:
a. the lid (60) is provided with a lid window (68), through which it is possible to look into the powder container (80) from above, the lid window (68) preferably being formed by a tinted plastic element, and/or
b. the lid (60) or a contact edge of the receiving space wall is provided with a sealing component (66) sealingly isolating the receiving space (32) when the lid (60) is in its closed state.

3. Scale system (10) according to claim 1 or 2 with the following further feature:
a. the lid (60) is provided pivotably movably at an upper end face of the receiving space wall (44),
preferably with the following additional feature:
b. a snap-locking device (62) for fixing the lid (60) in the closed state is provided on the receiving space wall or on the lid (60).

4. Scale system (10) according to claim 2 or 3 with the following further feature:
a. the receiving space (32) is of flexible size,
preferably with the following additional feature:
b. the receiving space wall (40, 42, 44) has a modular design, so that the size of the receiving space can be adapted by using or not using at least one removable receiving space wall element (42).

5. Scale system (10) according to one of the claims 2 to 4 with the following further feature:
a. the receiving space wall is formed by at least two separable wall parts (40, 42, 44) which can be separated from each other for the purpose of opening the receiving space 32 in order to remove a powder container (80) and insert a powder container (80),
preferably with the following additional feature:
b. the wall parts can be connected to one another by a snap connection.

6. Scale system (10) according to claim 5 with the following further feature:
a. the wall parts can be connected to one another by a threaded connection,
preferably with the following additional feature:
b. the wall parts are preferably formed, at least in sections, as circular-cylindrically shaped wall components:

7. Scale system (10) according to any of claims 2 to 6 with the following further feature:
a. the receiving space wall (40, 42, 44) is connected to the weighing surface and forms a part of the weight sensed by the weighing sensor,
preferably with the following additional feature:
b. the receiving space wall (40) is at least partially formed integrally with the weighingsurface (30) together forming a receptacle open at the upper end.

8. Scale system (10) according to any of claims 2 to 7 with the following further feature:
a. the receiving space is provided with a window, so that imprints on the powder container can be read when the powder container is arranged in the receiving space.

9. Scale system (10) to one of the preceding claims with the following further feature:
a. the evaluation device (50) is configured to determine during a stepwise removal of a partial mass from the weighing surface (30) the partial mass already removed by comparing the mass currently measured by the weighing sensor (58) with a previously recorded reference mass (110) prior to the removal, and
b. the evaluation device (50) is configured to generate output data on basis of the partial mass already removed and to display said output data on the display device (90), said output data reflecting the partial mass removed since the recordation of the reference mass (110) and said output data comprising a growing output value (100, 102) representing the removed partial mass,
preferably with the following additional feature:
c. the output value (102) corresponds to a number of mass units, the value of said mass unit stored in the evaluation device (50) or calculable by the evaluation device (50), wherein the size of these mass units corresponds to a scoop filling quantity and preferably is between 2 grams and 8 grams.

10. Scale system (10) according to one of the preceding claims with the following further feature:
a. the evaluation device (50) is configured
- to determine the partial mass of a single removal in the course of the stepwise increase of the removed partial mass, and
- to compare the partial mass of the single removal with an expected mass of a scoop filling quantity powder,
preferably having at least one of the following additional features:
b. the evaluation device (50) is configured to signal a deviation of the partial mass of the single removal from the expected mass of a scoop filling quantity powder, in particular by signaling via the display device (90), via a speaker or a haptic actuator LED, and/or
c. the evaluation device (50) is configured to determine the expected mass of a scoop filling quantity powder on basis of information about the powder density and a scoop volume, and/or
d. the evaluation device (50) is configured to determine and store the reference mass (110) before or at the start of usage of the scale system, wherein the evaluation device (50) can be configured to detect the start of usage of the scale system (10) by means of the weighing sensor (58), in particular by the beginning of the mass reduction in course of powder removal, by a movement of the base housing (20), by an opening movement of a lid (60) or by the detachment of a scoop (18), or wherein the evaluation device (50) can be configured to detect the start of usage of the scale system (10) by an opening movement of a lid (60) using the weighing sensor or an additional sensor, in particular an accelerometer or a switch associated with the lid (60), or wherein the evaluation device (50) can be configured to detect the start of usage of the scale system (10) by manual actuation of a hardware key or a software function.

11. Scale system (10) according to one of the preceding claims with the following further feature:
a. on the weighing surface (30) or in the receiving space (32) of the scale system (10) a powder container (80) is arranged,
preferably with at least one of the following features:
b. the powder container (80) is at least partially made of metal and has, in particular a metal can as the container body (82), or
c. the powder container (80) is at least partially made of plastic, in particular with walls of a multilayered plastic material, or
d. the powder container (80) has flexible walls forming a powder bag, or
e. the powder container (80) has stiff walls forming a container of fixed dimensions, or
f. the powder container (80) has a cover element (84) which is not included in the receiving space (32) when the powder container (80) is inserted into the receiving space (32).

12. Scale system (10) according to claim 11 with the following further feature:
a. the powder container (80) is formed at least predominantly and preferably completely from cardboard and/or multiple paper layers.

13. Scale system (10) according to one of the preceding claims with the following further feature:
a. the scale system (10) has two subunits (12, 14), namely a main unit (12), which comprises at least the base housing (20), the weighing surface (30) and the weighing sensor (58), and an additional unit, which comprises at least the display device (90),
preferably with at least one of the following additional features:
b. the subunits (12, 14) are connected via a wireless data network, and/or
c. the additional unit (14) is formed by a computer, a tablet computer, a smartphone, or a smartwatch, and/or
d. the additional unit (14) is connected to the Internet and is configured,
- to initiate order processes concerning new powder containers (80), and/or
- to load data on different types of powder containers (80) from the internet, and/or
- to check for an existing powder container (80), whether this container fulfills originality criteria, and/or
e. in addition to the display device (90) on the additional unit (14), an additional display device and/or at least one additional LED is provided on the main unit, and/or
f. the evaluation device (50) is provided as part of the main unit (12) or
g. the evaluation device (50) is split into evaluation subunits (50A,50B) being part of the main unit and the additional unit, said evaluation subunits:
- each having a processor and/or
- communicating over a wireless data network and/or
- cooperating such that the evaluation subunit (50A) of the main unit (12) processes the sensor data of the weighing sensor (58) and submits this data to the evaluation subunit (50B) of the additional unit (12) for further calculation of the output value (102), or
- cooperating such that the evaluation subunit (50A) of the main unit (12) processes the sensor data of the weighing sensor (58), calculates the output value (102) and submits the output value (102) to the evaluation subunit (50B) of the additional unit (12) for displaying it on the display device (90).

14. Scale system (10) according to one of the preceding claims with the following further feature:
a. the scale system (10) has at least one further sensor in addition to the weighing sensor, the at least one further sensor preferably fulfilling one of the following features:
- the at least one further sensor is a sensor for detecting a marking applied to the powder container, in particular an RFID reader for reading an RFID-Tag of the powder container or an optical sensor for reading a print on the powder container, and/or
- the at least one further sensor is a sensor for mechanically detecting the opening of the lid of the scale system, and/or
- the at least one further sensor is an accelerometer for detecting movement of the scale system, in particular of its base unit.

15. Scale system (10) according to one of the preceding claims with at least one of the following further features:
a. the scale system (10) has a signaling mechanism, which indicates by signalizing a pending removal of powder, in particular due to an upcoming feeding, and/or
b. the scale system (10) has a logging mechanism, which logs the removal of powder and/or an expected, but missing removal of powder, and/or
c. the scale system (10) can be disassembled without tools, whereby at least the base housing (20) and the weighing sensor (58) can be separated from each other without tools, and/or
d. the evaluation device (50) can be operated in a low-power mode in which at least the weighing sensor (58) is deactivated, or sensor data of the weighing sensor (58) is not evaluated, the evaluation device (50) preferably being configured to deactivate the low-power mode in response to the detection of a movement by a movement sensor, and/or
e. a power connection is provided on the base housing (20), preferably in the form of a USB power connection, and/or
f. the evaluation device (50) is configured to store a history of removal events together with data regarding the removed mass in course of the removal, wherein in particular the evaluation device (50) is configured to compile information about feeds, about missed feeds, about the total powder overweight or underweight removed over a defined time or over the time a current container has been in use, and/or
g. the scale system (10) comprises a scoop (18), wherein the scoop (18) preferably a scoop volume between 1 cm³ and 30 cm³, preferably between 4 cm³ and 9 cm³, and/or wherein the scale system (10) comprises a leveling rim (45) for wiping excess powder from the scoop (18), said leveling rim (45) preferably being provided on the base housing or stationery to the weighingsurface (30), and/or wherein the volume of the scoop (18) is stored in the evaluation device (50) for the purpose of determining the mass unit, and/or wherein the mass of the scoop (18) is stored in the evaluation device (50) for inclusion in a calculation regarding the already removed partial mass, and/or wherein the scale system (10) comprises a scoop holder (64) for storing the scoop (18) when not in use, said scoop holder (64) being provided on the base housing or stationary to the weighing surface (30), preferably being provided on an inner side of a lid (60) of the scale system (10), wherein the scoop holder (64) is preferably a magnetic scoop holder or a clamping scoop holder, preferably made of an elastomeric material.

## Patentansprüche

1. Wiegesystem (10) zur Messung einer Pulvermenge mit den folgenden Merkmalen:
a. das Wiegesystem (10) umfasst ein Basisgehäuse (20) zur ortsfesten Aufstellung, und
b. das Wiegesystem (10) umfasst eine relativ zum Basisgehäuse (20) bewegliche Wiegefläche (30), und
c. das Wiegesystem (10) umfasst einen Wiegesensor (58), der die Masse eines auf der Wiegefläche (30) angeordneten Pulverbehälters (80) misst, und
d. das Wiegesystem (10) umfasst eine Auswerteeinrichtung (50), die dazu ausgebildet ist, Sensordaten des Wiegesensors (58) auszuwerten und Ausgabedaten zu erzeugen, und
e. das Wiegesystem (10) umfasst eine Anzeigeeinrichtung, die dazu ausgebildet ist, die Ausgabedaten auszugeben, und
f. das Wiegesystem (10) umfasst einen Aufnahmeraum (32) zur Aufnahme eines Pulverbehälters (80), wobei die Bodenfläche des Aufnahmeraums (32) durch die Wiegefläche (30) gebildet ist,
**gekennzeichnet durch** die folgenden weitere Merkmale:
g. der Aufnahmeraum (32) ist umlaufend von einer Aufnahmeraumwand (40, 42, 44) umgeben, und
h. der Aufnahmeraum (32) ist an einer der Wiegefläche (30) gegenüberliegenden Oberseite mit einem abnehmbaren oder verschiebbaren Deckel (60) versehen, der im geschlossenen Zustand den Aufnahmeraum nach oben hin verschließt.

2. Wiegesystem nach Anspruch 1 mit den folgenden weiteren Merkmalen:
a. der Deckel (60) weist ein Deckelfenster (68) auf, durch das von oben in den Pulverbehälter (80) hineingesehen werden kann, wobei das Deckelfenster (68) vorzugsweise durch ein getöntes Kunststoffelement gebildet ist, und/oder
b. der Deckel (60) oder eine Kontaktkante der Aufnahmeraumwand ist mit einem Dichtungselement (66) versehen, das den Aufnahmeraum (32) im geschlossenen Zustand des Deckels (60) dichtend isoliert.

3. Wiegesystem (10) nach Anspruch 1 oder 2 mit dem folgenden weiteren Merkmal:
a. der Deckel (60) ist schwenkbeweglich an einer oberen Stirnfläche der Aufnahmeraumwand (44) angeordnet,
vorzugsweise mit dem folgenden zusätzlichen Merkmal:
b. an der Aufnahmeraumwand oder am Deckel (60) ist eine Schnappverriegelung (62) zum Fixieren des Deckels (60) im geschlossenen Zustand vorgesehen.

4. Wiegesystem (10) nach Anspruch 2 oder 3 mit dem folgenden weiteren Merkmal:
a. der Aufnahmeraum (32) ist in seiner Größe variabel ausgebildet,
vorzugsweise mit dem folgenden zusätzlichen Merkmal:
b. die Aufnahmeraumwand (40, 42, 44) ist modular ausgebildet, sodass die Größe des Aufnahmeraums durch Verwendung oder Weglassen wenigstens eines abnehmbaren Aufnahmeraumwandelements (42) anpassbar ist.

5. Wiegesystem (10) nach einem der Ansprüche 2 bis 4 mit dem folgenden weiteren Merkmal:
a. die Aufnahmeraumwand wird durch wenigstens zwei voneinander trennbare Wandteile (40, 42, 44) gebildet, die voneinander lösbar sind, um den Aufnahmeraum (32) zum Entnehmen oder Einsetzen eines Pulverbehälters (80) zu öffnen,
vorzugsweise mit dem folgenden zusätzlichen Merkmal:
b. die Wandteile sind mittels einer Schnappverbindung miteinander verbindbar.

6. Wiegesystem (10) nach Anspruch 5 mit dem folgenden weiteren Merkmal:
a. die Wandteile sind mittels einer Gewindeverbindung miteinander verbindbar,
vorzugsweise mit dem folgenden zusätzlichen Merkmal:
b. die Wandteile sind zumindest abschnittsweise kreiszylindrisch ausgebildet.

7. Wiegesystem (10) nach einem der Ansprüche 2 bis 6 mit dem folgenden weiteren Merkmal:
a. die Aufnahmeraumwand (40, 42, 44) ist mit der Wiegefläche verbunden und bildet einen Teil des vom Wiegesensor erfassten Gewichts,
vorzugsweise mit dem folgenden zusätzlichen Merkmal:
b. die Aufnahmeraumwand (40) ist wenigstens teilweise einstückig mit der Wiegefläche (30) ausgebildet, sodass gemeinsam eine nach oben offene Aufnahme gebildet ist.

8. Wiegesystem (10) nach einem der Ansprüche 2 bis 7 mit dem folgenden weiteren Merkmal:
a. der Aufnahmeraum ist mit einem Sichtfenster versehen, sodass Aufdrucke auf dem Pulverbehälter lesbar sind, wenn dieser im Aufnahmeraum angeordnet ist.

9. Wiegesystem (10) nach einem der vorhergehenden Ansprüche mit den folgenden weiteren Merkmalen:
a. die Auswerteeinrichtung (50) ist dazu ausgebildet, während einer schrittweisen Entnahme einer Teilmasse von der Wiegefläche (30) die bereits entnommene Teilmasse durch Vergleich der aktuell gemessenen Masse mit einer vor Entnahme erfassten Referenzmasse (110) zu bestimmen, und
b. die Auswerteeinrichtung (50) ist dazu ausgebildet, auf Grundlage der bereits entnommenen Teilmasse Ausgabedaten zu erzeugen und diese auf der Anzeigeeinrichtung (90) anzuzeigen, wobei die Ausgabedaten die seit Erfassung der Referenzmasse (110) entnommene Teilmasse widerspiegeln und einen ansteigenden Ausgabewert (100, 102) umfassen, der die entnommene Teilmasse repräsentiert,
vorzugsweise mit dem folgenden zusätzlichen Merkmal:
c. der Ausgabewert (102) entspricht einer Anzahl von Masseneinheiten, deren Wert in der Auswerteeinrichtung (50) gespeichert oder durch diese berechenbar ist, wobei die Größe der Masseneinheiten einer Löffelfüllmenge entspricht und vorzugsweise zwischen 2 g und 8 g liegt.

10. Wiegesystem (10) nach einem der vorhergehenden Ansprüche mit dem folgenden weiteren Merkmal:
a. die Auswerteeinrichtung (50) ist dazu ausgebildet,
- die Teilmasse einer einzelnen Entnahme im Verlauf der schrittweisen Erhöhung der entnommenen Teilmasse zu bestimmen, und
- die Teilmasse der einzelnen Entnahme mit einer erwarteten Masse einer Löffelfüllmenge Pulver zu vergleichen,
vorzugsweise mit wenigstens einem der folgenden zusätzlichen Merkmale:
b. die Auswerteeinrichtung (50) ist dazu ausgebildet, eine Abweichung der Teilmasse der einzelnen Entnahme von der erwarteten Masse einer Löffelfüllmenge Pulver zu signalisieren, insbesondere über die Anzeigeeinrichtung (90), einen Lautsprecher oder einen haptischen Aktor bzw. eine LED, und/oder
c. die Auswerteeinrichtung (50) ist dazu ausgebildet, die erwartete Masse einer Löffelfüllmenge Pulver auf Grundlage von Informationen zur Pulverdichte und einem Löffelvolumen zu bestimmen, und/oder
d. die Auswerteeinrichtung (50) ist dazu ausgebildet, die Referenzmasse (110) vor oder zu Beginn der Nutzung des Wiegesystems zu bestimmen und zu speichern, wobei der Beginn der Nutzung mittels des Wiegesensors (58) detektierbar ist, insbesondere durch Beginn der Massenreduktion infolge einer Pulverentnahme, durch eine Bewegung des Basisgehäuses (20), durch eine Öffnungsbewegung des Deckels (60) oder durch das Entnehmen eines Löffels (18), oder durch eine Öffnungsbewegung des Deckels mittels des Wiegesensors oder eines zusätzlichen Sensors, insbesondere eines Beschleunigungssensors oder eines dem Deckel (60) zugeordneten Schalters, oder durch manuelle Betätigung einer Hardwaretaste oder einer Softwarefunktion.

11. Wiegesystem (10) nach einem der vorhergehenden Ansprüche mit dem folgenden weiteren Merkmal:
a. auf der Wiegefläche (30) oder im Aufnahmeraum (32) ist ein Pulverbehälter (80) angeordnet,
vorzugsweise mit wenigstens einem der folgenden Merkmale:
b. der Pulverbehälter (80) besteht zumindest teilweise aus Metall, insbesondere mit einer Metalldose als Behälterkörper (82), oder
c. der Pulverbehälter (80) besteht zumindest teilweise aus Kunststoff, insbesondere mit Wänden aus einem mehrschichtigen Kunststoffmaterial, oder
d. der Pulverbehälter (80) weist flexible Wände auf und bildet einen Pulverbeutel, oder
e. der Pulverbehälter (80) weist steife Wände auf und bildet einen Behälter mit festen Abmessungen, oder
f. der Pulverbehälter (80) weist ein Abdeckelement (84) auf, das beim Einsetzen in den Aufnahmeraum (32) nicht in diesem enthalten ist.

12. Wiegesystem (10) nach Anspruch 11 mit dem folgenden weiteren Merkmal:
a. der Pulverbehälter (80) besteht überwiegend und vorzugsweise vollständig aus Karton und/oder mehreren Papierlagen.

13. Wiegesystem (10) nach einem der vorhergehenden Ansprüche mit dem folgenden weiteren Merkmal:
a. das Wiegesystem (10) weist zwei Untereinheiten (12, 14) auf, nämlich eine Haupteinheit (12), die zumindest das Basisgehäuse (20), die Wiegefläche (30) und den Wiegesensor (58) umfasst, sowie eine Zusatzeinheit, die zumindest die Anzeigeeinrichtung (90) umfasst,
vorzugsweise mit wenigstens einem der folgenden zusätzlichen Merkmale:
b. die Untereinheiten (12, 14) sind über ein drahtloses Datennetzwerk miteinander verbunden, und/oder
c. die Zusatzeinheit (14) ist als Computer, Tablet-Computer, Smartphone oder Smartwatch ausgebildet, und/oder
d. die Zusatzeinheit (14) ist mit dem Internet verbunden und dazu ausgebildet,
- Bestellvorgänge bezüglich neuer Pulverbehälter (80) zu initiieren, und/oder
- Daten zu unterschiedlichen Typen von Pulverbehältern (80) aus dem Internet zu laden, und/oder
- bei einem vorhandenen Pulverbehälter (80) zu prüfen, ob dieser Echtheitskriterien erfüllt, und/oder
e. zusätzlich zur Anzeigeeinrichtung (90) der Zusatzeinheit (14) ist an der Haupteinheit wenigstens eine weitere Anzeigeeinrichtung und/oder wenigstens eine zusätzliche LED vorgesehen, und/oder
f. die Auswerteeinrichtung (50) ist Teil der Haupteinheit (12), oder
g. die Auswerteeinrichtung (50) ist in Auswerteuntereinheiten (50A, 50B) aufgeteilt, die Teil der Haupt- bzw. der Zusatzeinheit sind, wobei diese
- jeweils einen Prozessor aufweisen und/oder
- über ein drahtloses Datennetzwerk kommunizieren und/oder
- derart zusammenwirken, dass die Auswerteuntereinheit (50A) der Haupteinheit (12) die Sensordaten des Wiegesensors (58) verarbeitet und an die Auswerteuntereinheit (50B) der Zusatzeinheit (12) zur weiteren Berechnung des Ausgabewerts (102) übermittelt, oder
- derart zusammenwirken, dass die Auswerteuntereinheit (50A) der Haupteinheit (12) die Sensordaten verarbeitet, den Ausgabewert (102) berechnet und diesen zur Anzeige an die Auswerteuntereinheit (50B) der Zusatzeinheit (12) übermittelt.

14. Wiegesystem (10) nach einem der vorhergehenden Ansprüche mit dem folgenden weiteren Merkmal:
a. das Wiegesystem (10) weist zusätzlich zum Wiegesensor wenigstens einen weiteren Sensor auf, wobei dieser vorzugsweise
- ein Sensor zum Erfassen einer am Pulverbehälter angebrachten Kennzeichnung ist, insbesondere ein RFID-Leser zum Auslesen eines RFID-Tags oder ein optischer Sensor zum Erfassen eines Aufdrucks, und/oder
- ein Sensor zum mechanischen Erfassen der Öffnung des Deckels ist, und/oder
- ein Beschleunigungssensor zum Erfassen einer Bewegung des Wiegesystems, insbesondere seiner Basiseinheit, ist.

15. Wiegesystem (10) nach einem der vorhergehenden Ansprüche mit wenigstens einem der folgenden weiteren Merkmale:
a. das Wiegesystem (10) weist einen Signalisierungsmechanismus auf, der eine bevorstehende Pulverentnahme signalisiert, insbesondere aufgrund einer bevorstehenden Fütterung, und/oder
b. das Wiegesystem (10) weist einen Protokollierungsmechanismus auf, der die Pulverentnahme und/oder eine erwartete, jedoch unterbliebene Pulverentnahme protokolliert, und/oder
c. das Wiegesystem (10) ist werkzeuglos zerlegbar, wobei zumindest das Basisgehäuse (20) und der Wiegesensor (58) werkzeuglos voneinander trennbar sind, und/oder
d. die Auswerteeinrichtung (50) ist in einem Energiesparmodus betreibbar, in dem zumindest der Wiegesensor (58) deaktiviert ist oder dessen Sensordaten nicht ausgewertet werden, wobei die Auswerteeinrichtung vorzugsweise dazu ausgebildet ist, den Energiesparmodus bei Detektion einer Bewegung durch einen Bewegungssensor zu deaktivieren, und/oder
e. am Basisgehäuse (20) ist ein Stromanschluss vorgesehen, vorzugsweise in Form eines USB-Anschlusses, und/oder
f. die Auswerteeinrichtung (50) ist dazu ausgebildet, eine Historie von Entnahmevorgängen gemeinsam mit Daten zur jeweils entnommenen Masse zu speichern, insbesondere zur Zusammenstellung von Informationen über Fütterungen, versäumte Fütterungen sowie über eine Gesamtüber- oder -unterdosierung innerhalb eines definierten Zeitraums oder während der Nutzungsdauer eines aktuellen Behälters, und/oder
g. das Wiegesystem (10) umfasst einen Löffel (18), wobei der Löffel vorzugsweise ein Volumen zwischen 1 cm³ und 30 cm³, vorzugsweise zwischen 4 cm³ und 9 cm³ aufweist, und/oder das Wiegesystem eine Abstreifkante (45) zum Abstreifen überschüssigen Pulvers vom Löffel (18) umfasst, wobei diese vorzugsweise am Basisgehäuse oder stationär zur Wiegefläche (30) angeordnet ist, und/oder das Volumen des Löffels (18) in der Auswerteeinrichtung (50) zur Bestimmung der Masseneinheit gespeichert ist, und/oder die Masse des Löffels (18) in der Auswerteeinrichtung gespeichert ist zur Berücksichtigung bei der Berechnung der bereits entnommenen Teilmasse, und/oder das Wiegesystem einen Löffelhalter (64) zum Aufbewahren des Löffels (18) umfasst, wobei der Löffelhalter vorzugsweise am Basisgehäuse oder stationär zur Wiegefläche (30), insbesondere an einer Innenseite des Deckels (60), angeordnet ist und vorzugsweise als magnetischer oder als Klemmhalter aus elastomerem Material ausgebildet ist.

## Revendications

1. Système de balance (10) pour mesurer une quantité de poudre, présentant les caractéristiques suivantes :
a. le système de balance (10) comprend un boîtier de base (20) pour un placement fixe, et
b. le système de balance (10) comprend une surface de pesage (30) mobile par rapport au boîtier de base (20), et
c. le système de balance (10) comprend un capteur de pesée (58) qui mesure la masse d'un récipient de poudre (80) sur la surface de pesée (30), et
d. le système de balance (10) comprend un dispositif d'évaluation (50) conçu pour évaluer les données de capteur provenant du capteur de pesée (58) et pour générer des données de sortie, et
e. le système de balance (10) comprend un dispositif d'affichage conçu pour délivrer les données de sortie, et
f. le système de balance (10) comprend un espace de réception (32) pour recevoir un récipient de poudre (80), la surface inférieure dudit espace de réception (32) étant formée par la surface de pesée (30),
**caractérisé par** les autres caractéristiques suivantes :
g. l'espace de réception (32) est entouré sur sa circonférence par une paroi d'espace de réception (40, 42, 44), et
h. sur un côté supérieur opposé à la surface de pesée (30), l'espace de réception (32) est pourvu d'un couvercle amovible ou pouvant être déplacé (60) qui, dans un état fermé, ferme l'espace de réception au sommet.

2. Système de balance selon la revendication 1, présentant les autres caractéristiques suivantes :
a. le couvercle (60) est pourvu d'une fenêtre de couvercle (68) à travers laquelle il est possible de regarder dans le récipient de poudre (80) depuis le dessus, la fenêtre de couvercle (68) étant de préférence formée par un élément en plastique teinté, et/ou
b. le couvercle (60) ou un bord de contact de la paroi d'espace de réception est pourvu d'un composant d'étanchéité (66) isolant de manière étanche l'espace de réception (32) lorsque le couvercle (60) est dans son état fermé.

3. Système de balance (10) selon la revendication 1 ou 2, présentant l'autre caractéristique suivante :
a. le couvercle (60) est placé mobile en pivotement sur une face d'extrémité supérieure de la paroi d'espace de réception (44),
de préférence présentant l'autre caractéristique suivante :
b. un dispositif d'encliquetage (62) pour fixer le couvercle (60) à l'état fermé est placé sur la paroi d'espace de réception ou sur le couvercle (60).

4. Système de balance (10) selon la revendication 2 ou 3, présentant l'autre caractéristique suivante :
a. l'espace de réception (32) est de taille flexible,
de préférence présentant l'autre caractéristique suivante :
b. la paroi d'espace de réception (40, 42, 44) a une conception modulaire, de sorte que la taille de l'espace de réception peut être adaptée en utilisant ou non au moins un élément amovible de la paroi d'espace de réception (42).

5. Système de balance (10) selon l'une des revendications 2 à 4, présentant l'autre caractéristique suivante :
a. la paroi d'espace de réception est formée d'au moins deux parties de paroi séparables (40, 42, 44) qui peuvent être séparées l'une de l'autre pour pouvoir ouvrir l'espace de réception (32) afin de retirer un récipient de poudre (80) et d'insérer un récipient de poudre (80),
de préférence présentant l'autre caractéristique suivante :
b. les parties de paroi peuvent être reliées les unes aux autres par une liaison par encliquetage.

6. Système de balance (10) selon la revendication 5, présentant l'autre caractéristique suivante :
a. les parties de paroi peuvent être reliées les unes aux autres par un raccordement fileté,
de préférence présentant l'autre caractéristique suivante :
b. les parties de paroi sont de préférence formées, au moins par sections, sous forme de composants de paroi de forme cylindrique circulaire.

7. Système de balance (10) selon l'une quelconque des revendications 2 à 6, présentant l'autre caractéristique suivante :
a. la paroi d'espace de réception (40, 42, 44) est reliée à la surface de pesée et forme une partie du poids détecté par le capteur de pesée,
de préférence présentant l'autre caractéristique suivante :
b. la paroi d'espace de réception (40) est au moins partiellement formée d'un seul tenant avec la surface de pesée (30) formant ensemble un réceptacle ouvert à l'extrémité supérieure.

8. Système de balance (10) selon l'une quelconque des revendications 2 à 7, présentant l'autre caractéristique suivante :
a. l'espace de réception est pourvu d'une fenêtre, de sorte que des impressions sur le récipient de poudre peuvent être lues lorsque le récipient de poudre est disposé dans l'espace de réception.

9. Système de balance (10) selon l'une des revendications précédentes, présentant l'autre caractéristique suivante :
a. le dispositif d'évaluation (50) est configuré pour déterminer, lors d'un retrait progressif d'une masse partielle de la surface de pesée (30), la masse partielle déjà retirée en comparant la masse mesurée actuellement par le capteur de pesée (58) à une masse de référence (110) enregistrée préalablement avant le retrait, et
b. le dispositif d'évaluation (50) est configuré pour générer des données de sortie à partir de la masse partielle déjà retirée et pour afficher lesdites données de sortie sur le dispositif d'affichage (90), lesdites données de sortie reflétant la masse partielle retirée depuis l'enregistrement de la masse de référence (110) et lesdites données de sortie comprenant une valeur de sortie croissante (100, 102) représentant la masse partielle retirée,
de préférence présentant l'autre caractéristique suivante :
c. la valeur de sortie (102) correspond à un nombre d'unités de masse, la valeur de ladite unité de masse étant stockée dans le dispositif d'évaluation (50) ou pouvant être calculée par le dispositif d'évaluation (50), la taille de ces unités de masse correspondant à une quantité de remplissage d'une cuillère et étant de préférence comprise entre 2 grammes et 8 grammes.

10. Système de balance (10) selon l'une des revendications précédentes, présentant l'autre caractéristique suivante :
a. le dispositif d'évaluation (50) est configuré pour
- déterminer la masse partielle d'un retrait unique au cours de l'augmentation progressive de la masse partielle retirée, et
- comparer la masse partielle du retrait unique avec une masse attendue d'une poudre de quantité de remplissage de cuillère,
présentant de préférence au moins l'une des autres caractéristiques suivantes :
b. le dispositif d'évaluation (50) est configuré pour signaler un écart de masse partielle du retrait unique dans la masse attendue d'une poudre de quantité de remplissage de cuillère, en particulier par signalisation par le biais du dispositif d'affichage (90), par un haut-parleur ou un actionneur haptique à DEL, et/ou
c. le dispositif d'évaluation (50) est configuré pour déterminer la masse attendue d'une poudre de quantité de remplissage de cuillère sur la base d'informations sur la densité de poudre et d'un volume de cuillère, et/ou
d. le dispositif d'évaluation (50) est configuré pour déterminer et stocker la masse de référence (110) avant ou en début d'utilisation du système de balance, le dispositif d'évaluation (50) pouvant être configuré pour détecter, au moyen du capteur de pesée (58), le début d'utilisation du système de balance (10), en particulier par le début de la réduction de masse au cours du retrait de la poudre, par un déplacement du boîtier de base (20), par un mouvement d'ouverture d'un couvercle (60) ou par le détachement d'une cuillère (18), ou le dispositif d'évaluation (50) pouvant être configuré pour détecter le début d'utilisation du système de balance (10) par un mouvement d'ouverture d'un couvercle (60) à l'aide du capteur de pesée ou d'un capteur supplémentaire, en particulier un accéléromètre ou un commutateur associé au couvercle (60), ou le dispositif d'évaluation (50) pouvant être configuré pour détecter le début de l'utilisation du système de balance (10) par actionnement manuel d'une clé matérielle ou d'une fonction logicielle.

11. Système de balance (10) selon l'une des revendications précédentes, présentant l'autre caractéristique suivante :
a. un récipient de poudre (80) est disposé sur la surface de pesée (30) ou dans l'espace de réception (32) du système de balance (10),
présentant de préférence au moins l'une des caractéristiques suivantes :
b. le récipient de poudre (80) est au moins partiellement en métal et comporte, en particulier, un boîtier métallique comme corps de récipient (82), ou
c. le récipient de poudre (80) est au moins partiellement en matière plastique, en particulier avec des parois en matière plastique multicouche, ou
d. le récipient de poudre (80) possède des parois souples formant un sac de poudre, ou
e. le récipient de poudre (80) a des parois rigides formant un récipient de dimensions fixes, ou
f. le récipient de poudre (80) présente un élément de recouvrement (84) qui n'est pas inclus dans l'espace de réception (32) lorsque le récipient de poudre (80) est inséré dans l'espace de réception (32).

12. Système de balance (10) selon la revendication 11, présentant l'autre caractéristique suivante :
a. le récipient de poudre (80) est formé au moins principalement et de préférence entièrement à partir de carton et/ou de multiples couches de papier.

13. Système de balance (10) selon l'une des revendications précédentes, présentant l'autre caractéristique suivante :
a. le système de balance (10) comporte deux sous-unités (12, 14), à savoir une unité principale (12), qui comprend au moins le boîtier de base (20), la surface de pesée (30) et le capteur de pesée (58), et une unité supplémentaire, qui comprend au moins le dispositif d'affichage (90),
présentant de préférence au moins l'une des autres caractéristiques suivantes :
b. les sous-unités (12, 14) sont connectées via un réseau de données sans fil, et/ou
c. l'unité supplémentaire (14) est formée par un ordinateur, une tablette numérique, un smartphone ou une montre intelligente, et/ou
d. l'unité supplémentaire (14) est connectée à Internet et est configurée pour
- initier des processus de commande concernant de nouveaux récipients de poudre (80), et/ou
- charger des données sur différents types de récipients de poudre (80) depuis internet, et/ou
- vérifier la présence d'un récipient de poudre (80) existant, si ce récipient répond à des critères d'originalité, et/ou
e. en plus du dispositif d'affichage (90) sur l'unité supplémentaire (14), un dispositif d'affichage supplémentaire et/ou au moins une DEL supplémentaire est prévu(e) sur l'unité principale, et/ou
f. le dispositif d'évaluation (50) fait partie de l'unité principale (12) ou
g. le dispositif d'évaluation (50) est décomposé en sous-unités d'évaluation (50A, 50B) faisant partie de l'unité principale et de l'unité supplémentaire, lesdites sous-unités d'évaluation :
- comportant chacune un processeur et/ou
- communiquant sur un réseau de données sans fil et/ou
- coopérant de telle sorte que la sous-unité d'évaluation (50A) de l'unité principale (12) traite les données de capteur du capteur de pesée (58) et les soumet à la sous-unité d'évaluation (50B) de l'unité supplémentaire (12) pour un calcul supplémentaire de la valeur de sortie (102), ou
- coopérant de telle sorte que la sous-unité d'évaluation (50A) de l'unité principale (12) traite les données de capteur du capteur de pesée (58), calcule la valeur de sortie (102) et soumet la valeur de sortie (102) à la sous-unité d'évaluation (50B) de l'unité supplémentaire (12) pour l'afficher sur le dispositif d'affichage (90).

14. Système de balance (10) selon l'une des revendications précédentes, présentant l'autre caractéristique suivante :
a. le système de balance (10) comporte, en plus du capteur de pesée, au moins un autre capteur, le ou les autres capteurs remplissant de préférence l'une des caractéristiques suivantes :
- le ou les autres capteurs sont des capteurs permettant de détecter un marquage appliqué sur le récipient de poudre, en particulier un lecteur RFID pour lire une étiquette RFID du récipient de poudre ou un capteur optique pour lire une impression sur le récipient de poudre, et/ou
- le ou les autres capteurs sont des capteurs permettant de détecter mécaniquement l'ouverture du couvercle du système de balance, et/ou
- le ou les autres capteurs sont des accéléromètres permettant de détecter un déplacement du système de balance, en particulier de son unité de base.

15. Système de balance (10) selon l'une des revendications précédentes, présentant au moins l'une des autres caractéristiques suivantes :
a. le système de balance (10) comporte un mécanisme de signalisation qui indique par signalisation un retrait de poudre en attente, en particulier en raison d'une alimentation prochaine, et/ou
b. le système de balance (10) comporte un mécanisme d'enregistrement, qui enregistre le retrait de la poudre et/ou un retrait attendu mais manquant de poudre, et/ou
c. le système de balance (10) peut être démonté sans outils, grâce à quoi au moins le boîtier de base (20) et le capteur de pesée (58) peuvent être séparés l'un de l'autre sans outils, et/ou
d. le dispositif d'évaluation (50) peut fonctionner en mode basse puissance dans lequel au moins le capteur de pesée (58) est désactivé, ou les données de capteur du capteur de pesée (58) ne sont pas évaluées, le dispositif d'évaluation (50) étant de préférence configuré pour désactiver le mode basse puissance en réponse à la détection d'un mouvement par un capteur de mouvement, et/ou
e. une connexion d'alimentation est prévue sur le boîtier de base (20), de préférence sous la forme d'une connexion d'alimentation USB, et/ou
f. le dispositif d'évaluation (50) est configuré pour stocker un historique des événements de retrait ainsi que des données concernant la masse retirée au cours du retrait, le dispositif d'évaluation (50) étant en particulier configuré pour compiler des informations sur des alimentations, sur des manques d'alimentation, sur le surpoids ou le sous-poids total de la poudre retirée pendant un temps défini ou pendant le temps d'utilisation d'un récipient courant, et/ou
g. le système de balance (10) comprend une cuillère (18), dans lequel la cuillère (18) présente de préférence un volume de cuillère compris entre 1 cm³ et 30 cm³, de préférence entre 4 cm³ et 9 cm³, et/ou dans lequel le système de balance (10) comprend un rebord de nivellement (45) pour essuyer la poudre en excès de la cuillère (18), ledit rebord de nivellement (45) étant de préférence placé sur le boîtier de base ou placé fixe sur la surface de pesée (30), et/ou dans lequel le volume de cuillère (18) est stocké dans le dispositif d'évaluation (50) afin de déterminer l'unité de masse, et/ou dans lequel la masse de la cuillère (18) est stockée dans le dispositif d'évaluation (50) pour inclusion dans un calcul concernant la masse partielle déjà retirée, et/ou dans lequel le système de balance (10) comprend un support de cuillère (64) pour stocker la cuillère (18) lorsqu'elle n'est pas utilisée, ledit support de cuillère (64) étant prévu sur le boîtier de base ou fixé sur la surface de pesée (30), de préférence sur un côté intérieur d'un couvercle (60) du système de balance (10), le support de cuillère (64) étant de préférence un support de cuillère magnétique ou un support de cuillère de serrage, de préférence en matériau élastomère.
